# EUROPÄISCHE PATENTSCHRIFT

(11) **EP 3 535 502 B1**
(45) Veröffentlichungstag und Bekanntmachung des Hinweises auf die Patenterteilung: **29.01.2020**
(21) Anmeldenummer: 17792086.5
(22) Anmeldetag: 02.11.2017
(51) Int. Cl.: F16F 13/10

(54) **HYDRAULISCH DÄMPFENDES LAGER**
HYDRAULICALLY DAMPING MOUNT
PALIER À AMORTISSEMENT HYDRAULIQUE

(30) Priorität: 03.11.2016 DE 102016120959
(43) Veröffentlichungstag der Anmeldung: 11.09.2019
(73) Patentinhaber: Vibracoustic GmbH, 64293 Darmstadt (DE)
(72) Erfinder: LILLIGREEN, Michael, 67547 Worms (DE); PHILIPP, Jan, 64683 Einhausen (DE); SCHEMER, Thomas, 69257 Wiesenbach (DE); STÖCKER, Timo, 69502 Hemsbach (DE)
(74) Vertreter: Flügel Preissner Schober Seidel
(86) Internationale Anmeldenummer: PCT/EP2017/078059
(87) Internationale Veröffentlichungsnummer: WO 2018/083178

(56) Entgegenhaltungen:
- DE-A1-102007 014 710
- US-A- 4 657 232

## Beschreibung

Die Erfindung betrifft ein hydraulisch dämpfendes Lager zur Lagerung eines Kraftfahrzeugaggregats, insbesondere zur Lagerung eines Kraftfahrzeugmotors an einer Kraftfahrzeugkarosserie, mit einer Tragfeder, die einen Lagerkern abstützt und eine Arbeitskammer umschließt, und einer Ausgleichskammer, die von der Arbeitskammer durch eine Trennwand getrennt und durch eine Ausgleichsmembran begrenzt ist, wobei die Ausgleichskammer und die Arbeitskammer mit einem Fluid gefüllt und über einen in die Trennwand eingebrachten Dämpfungskanal miteinander verbunden sind, wobei die Trennwand eine Membran aufweist, die schwingungsfähig aufgenommen ist, und wobei der Membran ein Schaumstoffelement zugeordnet ist, das die Membran bei einer Auslenkung abstützt.

Derartige hydraulisch dämpfende Lager werden auch als Hydrolager bezeichnet und dienen insbesondere zur Abstützung eines Kraftfahrzeugmotors an einer Kraftfahrzeugkarosserie, um einerseits die von Fahrbahnunebenheiten hervorgerufenen Schwingungen zu dämpfen und andererseits akustische Schwingungen zu isolieren. So bewirkt die aus einem elastomeren Material bestehende Tragfeder eine akustische Isolierung. Die von Fahrbahnunebenheiten hervorgerufenen Schwingungen werden durch ein hydraulisches System gedämpft, wobei das hydraulische System durch die fluidgedämpfte Arbeitskammer, die Ausgleichskammer und den die beiden Kammern miteinander verbindenden Dämpfungskanal gebildet wird.

Die Arbeitskammer wird durch eine Bewegung der Tragfeder vergrößert oder verkleinert, wodurch ein hydraulischer Druck in der Arbeitskammer aufgebaut wird. Infolge des Drucks wird das in der Arbeitskammer befindliche Fluid über den Dämpfungskanal in die Ausgleichskammer gedrückt. Aufgrund des geringen Durchmessers des Dämpfungskanals und der damit verbundenen hohen mechanischen Übersetzung, die sich aus dem äquivalenten, verdrängenden Querschnitt der Tragfeder in Relation zu dem Dämpfungskanalquerschnitt ergibt, werden die eingeleiteten Schwingungen gedämpft.

Zur Entkopplung hochfrequenter, kleinamplitudiger Schwingungen, das heißt im akustisch relevanten Bereich, ist die Einbringung einer elastischen Membran innerhalb der Trennwand bekannt. Hierbei schwingt die Membran bei hochfrequenten, kleinamplitudigen Schwingungen, sodass eine Erhöhung der dynamischen Steifigkeit des Lagers erheblich gemindert werden kann.

Im Leerlaufbetrieb des Motors ist eine Absenkung der dynamischen Steifigkeit erwünscht, die kleiner als die statische Steifigkeit des Lagers ist. Hingegen wird im Fahrbetrieb eine hohe Steifigkeit des Lagers verlangt, um die erforderlichen Dämpfungseigenschaften zu erzielen. Hierzu ist es bekannt, das hydraulisch dämpfende Lager mit einer Schaltvorrichtung für die Membran zu versehen, mit der das Lager an einen Fahrbetrieb oder einen Leerlaufbetrieb des Motors angepasst werden kann. Diese Schaltvorrichtung kann beispielsweise durch eine unter der Membran angeordnete Luftkammer realisiert werden, die schaltbar mit Luft gefüllt oder evakuiert wird.

Somit ist die Dämpfung von Schwingungen bei bestimmten Amplituden in der Regel verbunden mit einem Anstieg der dynamischen Gesamtsteifigkeit. Wenn eine geringe dynamische Steifigkeit erwünscht ist, wird gleichermaßen die Wirksamkeit des Dämpfungskanals eingeschränkt. Die beiden Zustände können jedoch üblicherweise nicht gleichzeitig auftreten.

DE 10 2007 014 710 A1 offenbart ein Hydrolager, welches einen fluidgefüllten Arbeitsraum und einen fluidgefüllten Ausgleichsraum aufweist. Der Arbeitsraum ist durch einen Kern und eine Tragfeder begrenzt. Der Ausgleichsraum ist durch eine Trennwand und eine Abschlussmembran begrenzt. Einen Bestandteil der Trennwand bildet der Düsenkäfig, der aus den beiden Düsenscheiben besteht, die einander mit axialem Abstand benachbart zugeordnet sind, wobei in dem durch den Abstand gebildeten Spalt eine Membran aus gummieleastischem Werkstoff zur Isolierung höherfrequenter, kleinamplitudiger Schwingungen schwingfähig angeordnet ist. Die Membran ist durch ein innerhalb des Spalts angeordnetes Schaltelement aus magnetischem Elastomerschaum arretiert. Das Schaltelement kann aktiviert werden, sodass die Membran innerhalb des Spalts zwischen den Düsenscheiben axial in Richtung der eingeleiteten Schwingungen frei hin und her beweglich ist.

Aus US 4,657,232 A ist ein Hydrolager bekannt, welches eine fluidgefüllte Arbeitskammer und eine fluidgefüllte Ausgleichskammer aufweist. Die Arbeitskammer ist durch eine elastomere Tragfeder und einen starren Abschnitt begrenzt. Die Ausgleichskammer ist durch den starren Abschnitt und einen Balg begrenzt. Innerhalb des starren Abschnitts ist ein Raum vorgesehen, in dem ein Gasreservoir durch eine elastomere Membran begrenzt ist. In einer alternativen Ausgestaltung ist das Gasreservoir nicht durch eine elastomere Membran begrenzt, sondern in einer elastomeren Schaumzelle aufgenommen.

Der Erfindung liegt die Aufgabe zu Grunde ein hydraulisch dämpfendes Lager zu schaffen, das trotz Dämpfung eine besonders niedrige dynamische Gesamtsteifigkeit aufweist.

Zur Lösung der Aufgabe wird ein hydraulisch dämpfendes Lager mit den Merkmalen des Anspruchs 1 vorgeschlagen. Vorteilhafte Ausgestaltungen des hydraulisch dämpfenden Lagers sind Gegenstand der abhängigen Ansprüche.

Bei dem erfindungsgemäßen Lager stützt das Schaumstoffelement die Membran derart ab, dass durch ein Ausschwingen der Membran das Schaumstoffelement komprimiert wird.

Wenn das Schaumstoffelement die Membran bei einer Auslenkung abstützt, erzeugt das Schaumstoffelement im Dämpfungssystem genügend Steifigkeit, damit bei einer bestimmten abgestimmten Frequenz ein Dämpfungseffekt auftritt. Zudem ist oberhalb der Resonanzfrequenz des Lagers die kombinierte Steifigkeit des Membran/Schaumstoffelement-Systems niedrig genug, um die Steifigkeit der Tragfeder zu reduzieren.

Die physikalischen Eigenschaften des Schaumstoffelements erlauben somit sowohl eine hohe Dämpfung, als auch eine niedrige Steifigkeit in dem Lager, ohne die Nebeneffekte oder Nachteile, die die jeweiligen Zustände üblicherweise aufweisen würden.

Schwingungen, die auf das hydraulisch dämpfende Lager wirken, werden von der Tragfeder aufgenommen und bewirken, dass sich die Arbeitskammer vergrößert oder verkleinert. Somit wird ein hydraulischer Druck in der Arbeitskammer aufgebaut. Für den angepassten Frequenzbereich wird der in der Arbeitskammer aufgebaute Druck auf die Membran übertragen. Dabei weist das Schaumstoffelement und die Membran eine Steifigkeit auf, die hoch genug ist, dass das Schaumstoffelement die Membran schwingungsunfähig abstützt. Das Fluid wird folglich durch den Dämpfungskanal gezwungen und erzeugt eine Dämpfung.

Ab einem festlegbaren Grenzdruck in der Arbeitskammer ist die Steifigkeit des Schaumstoffelements und der Membran nicht groß genug, dass das Schaumstoffelement die Membran schwingungsunfähig abstützt. Folglich schwingt die Membran aus. Die Höhe des Grenzdrucks kann durch die Steifigkeit des Schaumstoffelements und der Membran eingestellt werden. Durch das Ausschwingen der Membran wird das Schaumstoffelement komprimiert. Somit wird der Membran Platz zum Ausschwingen eingeräumt. Die Steifigkeit des Schaumstoffelements und der Membran ist dabei aber derart niedrig, dass die dynamische Gesamtsteifigkeit auf einen Wert ähnlich dem Zustand ohne Dämpfung eingestellt werden kann.

Vorteilhafterweise sind die Dämpfungseigenschaften des Lagers über die Shore-Härte des Schaumstoffelements einstellbar.

Das Schaumstoffelement ist vorteilhaft in einer Kammer aufgenommen. Diese kann in der Trennwand oder einem Lagertopf eingebracht werden.

In vorteilhafter Ausgestaltung ist die Kammer an einer Stirnseite durch die Membran verschlossen.

In einer vorteilhaften Ausgestaltung besteht das Schaumstoffelement aus einem geschlossenzelligen Schaumstoff. Ein geschlossenzelliges Schaumstoffelement ist im Gegensatz zu einem offenzelligen Schaumstoffelement wasserabweisend. Somit kann etwaig eintretende Feuchtigkeit nicht von dem Schaumstoffelement aufgenommen werden. In einer vorteilhaften Ausgestaltung ist das Schaumstoffelement aus einem PU-Schaum, insbesondere einem mikrozellulären Schaum (MCU), ausgebildet.

Das Schaumstoffelement kann aus einem Polyurethanschaum, insbesondere aus einem mikrozellulären Schaum (MCU) bestehen.

In einer vorteilhaften Ausgestaltung ist an der Kammer eine Öffnung vorgesehen ist, der ein Schaltventil zugeordnet ist. Durch die Öffnung an der Kammer, der ein Schaltventil zugeordnet ist, kann die Kammer steuerbar mit Luft gefüllt werden. Die Luft wird vorzugsweise direkt aus der Umgebung des hydraulisch dämpfenden Lagers entnommen.

Beim Ausschwingen der Membran wird das Schaumstoffelement derart komprimiert, dass ein leerer Raum in der Kammer entsteht. Dieser Raum vergrößert sich im Laufe des Ausschwingens radial nach außen und axial in Richtung des Ausschwingens der Membran. Wird der entstandene Raum über die Öffnung und das Schaltventil mit Luft gefüllt, entkoppelt dies für eine kurze Zeit die Membran von dem Schaumstoffelement und verringert somit die Steifigkeit des Membran/Schaumstoffelement - Systems. Dadurch kann die dynamische Gesamtsteifigkeit des hydraulisch dämpfenden Lagers reduziert werden.

In einer vorteilhaften Ausgestaltung ist das Schaumstoffelement hohlzylinderförmig ausgebildet.

Im Folgenden wird die Erfindung mit Bezug anhand von Ausführungsbeispielen näher beschrieben, die in den Figuren schematisch dargestellt sind. Es zeigen:
- Fig. 1: einen Querschnittsansicht eines Ausführungsbeispiels des hydraulisch dämpfenden Lagers; und
- Fig. 2: einen Querschnittsansicht eines weiteren Ausführungsbeispiels des hydraulisch dämpfenden Lagers.

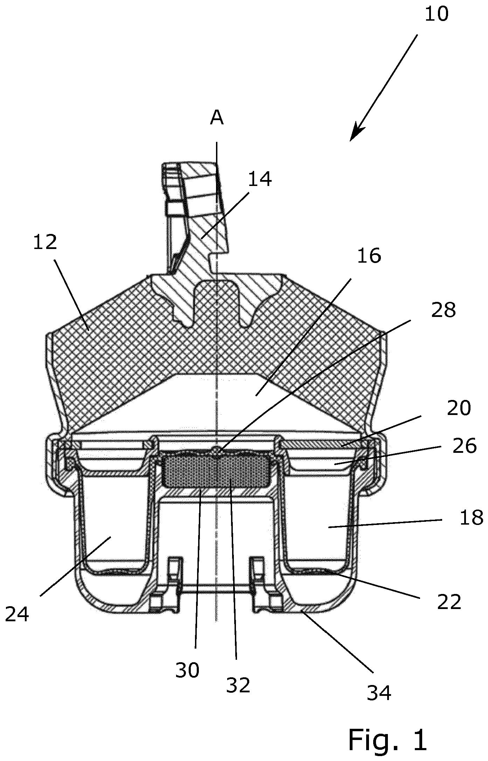

Fig. 1 zeigt ein hydraulisch dämpfendes Lager 10 mit einer Tragfeder 12, die einen Lagerkern 14 abstützt und eine Arbeitskammer 16 umschließt. Weiterhin ist eine r Ausgleichskammer 18 vorgesehen, die von der Arbeitskammer 16 durch eine Trennwand 20 getrennt und von einer Ausgleichsmembran 22 begrenzt ist. Die Arbeitskammer 16 und die Ausgleichskammer 18 sind mit einem Fluid 24 gefüllt und über einen in die Trennwand 20 eingebrachten Dämpfungskanal 26 miteinander verbunden.

Die Trennwand 20 weist eine schwingungsfähig aufgenommene Membran 28 auf. Der Membran 28 ist eine Kammer 30 zugeordnet, in der ein zylinderförmiges Schaumstoffelement 32 aufgenommen ist. Die Kammer 30 ist in einem Topf 34 eingeformt, der die Ausgleichskammer aufnimmt. Die Membran 28 deckt die Kammer 30 an einer Stirnseite der Kammer 34 ab.

Das Schaumstoffelement 32 füllt die Kammer 30 vollständig aus. Dabei liegt das Schaumstoffelement 32 sowohl an allen Seiten der Kammer 30, sowie an der Membran 28 an. Das Schaumstoffelement 32 ist allerdings nicht an der Membran befestigt. Das Schaumstoffelement 32 liegt an der Membran 28 in dem Bereich an, der im Betrieb des hydraulisch dämpfenden Lagers schwingungsfähig ist.

Schwingungen, die auf das hydraulisch dämpfende Lager 10 wirken, werden von der Tragfeder 12 aufgenommen und bewirken, dass sich die Arbeitskammer 16 vergrößert oder verkleinert. Somit wird ein hydraulischer Druck in der Arbeitskammer 16 aufgebaut. Für den angepassten Frequenzbereich wird der in der Arbeitskammer 16 aufgebaut Druck auf die Membran 28 übertragen. Das Schaumstoffelement 32 liegt jedoch in der Kammer 30 an der Membran 28 an und stützt diese. Das Schaumstoffelement 32 und die Membran 28 weisen zusammen eine Steifigkeit auf, die hoch genug ist, das Fluid 24 durch den Dämpfungskanal 26 zu zwingen und eine Dämpfung zu erzeugen. Die Steifigkeit ist dabei aber vergleichsweise niedrig, um somit die dynamische Gesamtsteifigkeit auf einen Wert ähnlich dem Zustand ohne Dämpfung einzustellen.

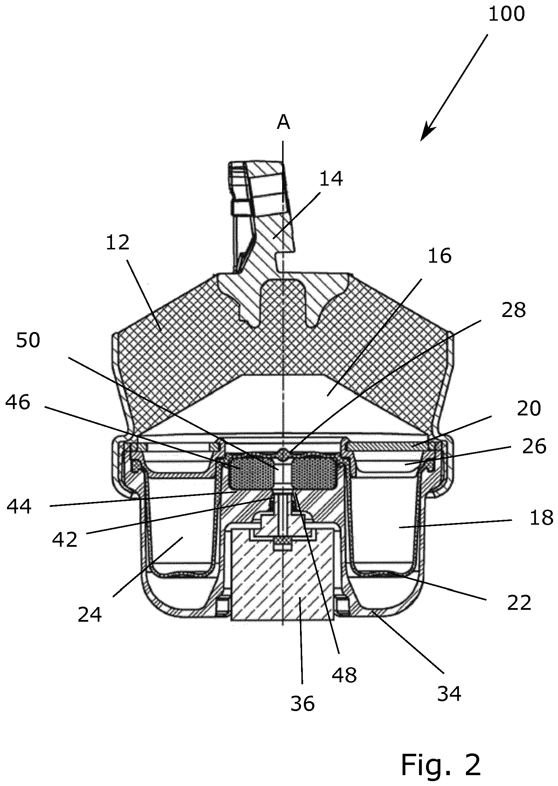

Fig. 2 zeigt eine weitere Ausführungsform des erfindungsgemäßen hydraulisch dämpfenden Lagers.

Das hydraulisch dämpfende Lager 100 weist eine Kammer 44 auf, die in radialer Richtung zentral auf der der Membran 28 abgewandten Seite eine Öffnung 48 aufweist, der ein Schaltventil 42 zugeordnet ist. In der Offenstellung des Schaltventils 42 kann von außerhalb Luft 36 in die Kammer 44 eingeleitet werden.

Außerdem weist das hydraulisch dämpfende Lager 100 ein hohlzylinderförmiges Schaumstoffelement 46 mit einem Durchgang 50 auf. Der Durchgang 50 ist in radialer Richtung zentral angeordnet und verläuft axial zu dem Schaumstoffelement 46 entlang der Achse A.

Auch bei dieser Ausführungsform werden Schwingungen, die auf das hydraulisch dämpfende Lager 100 wirken, von der Tragfeder 12 aufgenommen und bewirken, dass sich die Arbeitskammer 16 vergrößert oder verkleinert. Somit wird hydraulischer Druck in der Arbeitskammer 16 aufgebaut. Für den angepassten Frequenzbereich wird der in der Arbeitskammer 16 aufgebaut Druck auf die Membran 28 übertragen. Das Schaumstoffelement 46 liegt jedoch in der Kammer 44 an der Unterseite der Membran 28 an und stützt diese. Das Schaumstoffelement 46 und die Membran 28 weisen zusammen eine Steifigkeit auf, die hoch genug ist das Fluid 24 durch den Dämpfungskanal 26 zu zwingen und eine Dämpfung zu erzeugen.

Die Membran 28 wird durch das Schaumstoffelement 46 derart abgestützt, dass durch ein Ausschwingen der Membran 28 das Schaumstoffelement 46 komprimiert wird. Beim Ausschwingen der Membran 28 wird das Schaumstoffelement 46 derart komprimiert, dass ein leerer Raum in der Kammer 30 entsteht. Dieser Raum vergrößert sich im Laufe des Ausschwingens radial nach außen und axial in Richtung des Ausschwingens der Membran 28.

Mit Hilfe des in radialer Richtung zentral angeordneten und axial verlaufenden Durchgangs 50 des Schaumstoffelementes 46 kann der durch die ausschwingende Membran 28 in der Kammer 44 entstehende Raum mit Luft 36 ausgefüllt werden. Dies entkoppelt für eine kurze Zeit die Membran 28 von dem Schaumstoffelement 46 und verringert somit die Steifigkeit des Membran/Schaumstoffelement - Systems. Dadurch kann die dynamische Gesamtsteifigkeit des hydraulisch dämpfenden Lagers 100 reduziert werden.

### Bezugszeichenliste

- 10, 100: Hydraulisch dämpfendes Lager
- 12: Tragfeder
- 14: Lagerkern
- 16: Arbeitskammer
- 18: Ausgleichskammer
- 20: Trennwand
- 22: Ausgleichsmembran
- 24: Fluid
- 26: Dämpfungskanal
- 28: Membran
- 30, 44: Kammer
- 32, 46: Schaumstoffelement
- 34: Topf
- 36: Luft
- 42: Schaltventil
- 48: Öffnung
- 50: Durchgang

## Patentansprüche

1. Hydraulisch dämpfendes Lager (10, 100) zur Lagerung eines Kraftfahrzeugaggregats, insbesondere zur Lagerung eines Kraftfahrzeugmotors an einer Kraftfahrzeugkarosserie, mit einer Tragfeder (12), die einen Lagerkern (14) abstützt und eine Arbeitskammer (16) umschließt, und einer Ausgleichskammer (18), die von der Arbeitskammer (16) durch eine Trennwand (20) getrennt und durch eine Ausgleichsmembran (22) begrenzt ist, wobei die Ausgleichskammer (18) und die Arbeitskammer (16) mit einem Fluid (24) gefüllt und über einen in die Trennwand (20) eingebrachten Dämpfungskanal (26) miteinander verbunden sind, wobei die Trennwand (20) eine Membran (28) aufweist, die schwingungsfähig aufgenommen ist, und wobei der Membran (28) ein Schaumstoffelement (32, 46) zugeordnet ist, das die Membran (28) bei einer Auslenkung abstützt, **dadurch gekennzeichnet, dass** das Schaumstoffelement (32, 46) die Membran (28) derart abstützt, dass durch ein Ausschwingen der Membran (28) das Schaumstoffelement (32, 46) komprimiert wird.

2. Hydraulisch dämpfendes Lager (10, 100) nach Anspruch 1, **dadurch gekennzeichnet, dass** das Schaumstoffelement (32, 46) in einer Kammer (30, 44) aufgenommen ist.

3. Hydraulisch dämpfendes Lager (10, 100) nach Anspruch 2, **dadurch gekennzeichnet, dass** die Kammer (33,44) an einer Stirnseite durch die Membran (28) verschlossen ist.

4. Hydraulisch dämpfendes Lager (10, 100) nach einem der voranstehenden Ansprüche, **dadurch gekennzeichnet, dass** das Schaumstoffelement (32, 46) aus einem geschlossenzelligen Schaumstoff besteht.

5. Hydraulisch dämpfendes Lager (10, 100) nach einem der voranstehenden Ansprüche, **dadurch gekennzeichnet, dass** das Schaumstoffelement (32, 46) aus einem Polyurethanschaum, insbesondere einem mikrozellulären Schaum (MCU), besteht.

6. Hydraulisch dämpfendes Lager (10, 100) nach einem der Ansprüche 2 und 3, **dadurch gekennzeichnet, dass** an der Kammer (30, 44) eine Öffnung (48) vorgesehen ist, der ein Schaltventil (42) zugeordnet ist.

7. Hydraulisch dämpfendes Lager (10, 100) nach Anspruch 6, **dadurch gekennzeichnet, dass** das Schaumstoffelement (32, 46) hohlzylinderförmig ausgebildet ist.

8. Hydraulisch dämpfendes Lager (10, 100) nach einem der voranstehenden Ansprüche, **dadurch gekennzeichnet, dass** die Dämpfungseigenschaften des Lagers über die Shore-Härte des Schaumstoffelements (32, 46) einstellbar sind.

## Claims

1. Hydraulically damping mount (10, 100) for supporting a motor vehicle assembly, in particular for supporting a motor vehicle engine on a motor vehicle body, with a suspension spring (12) which supports a mounting core (14) and encloses a working chamber (16), and a compensation chamber (18) which is separated from the working chamber (16) by a separation wall (20) and bounded by a balancing diaphragm (22), wherein the balancing chamber (18) and the working chamber (16) are filled with a fluid (24) and interconnected by a damping channel (26) incorporated in the separation wall (20), wherein the separation wall (20) has a diaphragm (28) which is accommodated in a vibratory manner, and wherein the diaphragm (28) is associated with a foam element (32, 46), supporting the diaphragm (28) at a deflection, **characterised in that** the foam element (32, 46) supports the diaphragm (28) such that the foam element (32, 46) gets compressed by an oscillation of the diaphragm (28).

2. Hydraulically damping mount (10, 100) according to claim 1, **characterised in that** the foam element (32, 46) is received in a chamber (30, 44).

3. Hydraulically damping mount (10, 100) according to the claim 2, **characterised in that** the chamber (33, 44) is closed at the frontend by the membrane (28).

4. Hydraulically damping mount (10, 100) according to any one of the preceding claims, **characterised in that** the foam element (32, 46) consists of a closed-cell foam.

5. Hydraulically damping mount (10, 100) according to any one of the preceding claims, **characterised in that** the foam element (32, 46) consists of a polyurethane foam, in particular a microcellular foam (MCU).

6. Hydraulically damping mount (10, 100) according to one of the claims 2 and 3, **characterised in that** the chamber (30, 44) is provided with an opening (48), which is allocated with a switching valve (42).

7. Hydraulically damping mount (10, 100) according to claim 6, **characterised in that** the foam element (32, 46) is formed as a hollow cylinder.

8. Hydraulically damping mount (10, 100) according to any one of the preceding claims, **characterised in that** the absorption properties of the mount are adjustable via the Shore hardness of the foam element (32,46).

## Revendications

1. Support à amortissement hydraulique (10, 100) destiné à supporter un groupe dans un véhicule, en particulier à supporter un moteur de véhicule au niveau d'une carrosserie de véhicule, avec un ressort porteur (12) qui soutient un cœur de support (14) et qui entoure une chambre de travail (16), et une chambre de compensation (18) qui est séparée de la chambre de travail (16) par une paroi de séparation (20) et qui est délimitée par une membrane de compensation (22), dans lequel la chambre de compensation (18) et la chambre de travail (16) sont remplies avec un fluide (24) et reliées entre elles par l'intermédiaire d'un canal d'amortissement (26) ménagé dans la paroi de séparation (20), dans lequel la paroi de séparation (20) présente une membrane (28) qui est logée de manière à être susceptible d'osciller, et dans lequel à la membrane (28) est associé un élément en mousse (32, 46) qui soutient la membrane (28) lors d'une déviation, **caractérisé en ce que** l'élément en mousse (32, 46) soutient la membrane (28) de telle sorte que l'élément en mousse (32, 46) est comprimé par une oscillation de la membrane (28).

2. Support à amortissement hydraulique (10, 100) selon la revendication 1, **caractérisé en ce que** l'élément en mousse (32, 46) est logé dans une chambre (30, 44).

3. Support à amortissement hydraulique (10, 100) selon la revendication 2, **caractérisé en ce que** la chambre (30, 44) est fermée par la membrane (28) au niveau d'un côté frontal.

4. Support à amortissement hydraulique (10, 100) selon l'une quelconque des revendications précédentes, **caractérisé en ce que** l'élément en mousse (32, 46) est constitué d'une mousse à cellules fermées.

5. Support à amortissement hydraulique (10, 100) selon l'une quelconque des revendications précédentes, **caractérisé en ce que** l'élément en mousse (32, 46) est constitué d'une mousse de polyuréthane, en particulier d'une mousse microcellulaire (MCU).

6. Support à amortissement hydraulique (10, 100) selon l'une des revendications 2 et 3, **caractérisé en ce qu'**il est prévu, au niveau de la chambre (30, 44), une ouverture (48) à laquelle est associée à une vanne de commutation (42).

7. Support à amortissement hydraulique (10, 100) selon la revendication 6, **caractérisé en ce que** l'élément en mousse (32, 46) est réalisé en forme de cylindre creux.

8. Support à amortissement hydraulique (10, 100) selon l'une des revendications précédentes, **caractérisé en ce que** les caractéristiques d'amortissement du support peuvent être réglées via la dureté Shore de l'élément en mousse (32, 46).
